# EUROPEAN PATENT APPLICATION

(11) **EP 1 736 461 A1**
(43) Date of publication of application: **27.12.2006**
(21) Application number: 05105684.4
(22) Date of filing: 24.06.2005
(51) Int. Cl.: C05F 17/02, C05F 17/00

(54) **system and method for treatment of organic waste**

(71) Applicant: BIOE S.R.L., 20124 Milano (IT)
(72) Inventor: ALLIEVI, Elisa, 20124, Milan (IT)
(74) Representative: Gervasi, Gemma

(57) **Abstract**

The present invention concerns a system and related method of use for biostabilisation of a static waste pile. The use of a breathable impermeable cover permits rapid achievement of the optimal mineralisation parameters of the organic component, and avoids the use of costly biofilters, permitting improved control of the dispersion of unpleasant smells in the atmosphere.

## Description

### Field of application of the invention

The present invention relates to a system and a correspondent method of use for treatment of the organic fraction of solid waste by means of a process of biostabilisation of its wet component, with excellent control of the emission of smells into the external environment and of bacteria and fungal hypha, and reduction of the production of percolate.

The system uses the classic technique of composting or biostabilisation of the organic waste in a static pile without turning over, blowing in of air controlled by a computerised automatic system and covering of the waste with a impermeable breathable covering.

The system can be applied to the processing of all types of wastes that have at least a minimum organic component, for example solid urban waste, sludge, algae, agroindustrial residues, stable manure etc.

The biostabilisation system provides, via a simple, inexpensive and ecologically acceptable process, for the correct treatment of increasing quantities of biodegradable waste, in full compliance with the provisions of law, so that the waste does not end up at the dump without the foreseen preliminary treatment.

### State of the art

As established by recent laws, urban waste can no longer be dumped without preliminary treatment to reduce the volume, the considerable production of percolate, biogas and therefore unpleasant-smelling emissions into the atmosphere, in addition to the spread of germs and spores in the external environment.

The process of "biostabilisation" in general consists of modifying the chemical-physical characteristics of the waste, so as to reduce its organic component in weight and volume.
Said process occurs in the presence of oxygen (aerobic digestion), by means of oxidation of the organic fraction contained in the waste. The treatment is terminated when the organic component has been completely mineralised.

The achievement of biological stability of a product at the end of the process is expressed by a value that indicates the degree of biological activity of the mass, or the consumption of oxygen of a certain mass defined in one unit of time. The lower this value, the more "mature" the product treated, since the organic fraction has been mineralised.

In the case of treatment of organic waste, the final value must be considerably lower than the initial one. Said value is called static or dynamic "Respirometric index" and is measured in mgO₂/kg S.V.*h. and represents the degree of maturing of the product. As regards the static Respirometric Index, for a fresh product it is around 2500mgO₂/kg S.V.*h, for an organic product from differentiated waste collection and is considered biostabilised when it reaches a value of < 600 g O₂.

### Scope of the invention

The scope of the present invention is to solve the above-mentioned problems by means of a system and related procedure for use which allows a rapid, reliable and technically simple biostabilisation, economically advantageous for the market and which can be implemented on an industrial scale.

### Description of the invention

Said scope is achieved by means of a system as claimed in claim 1 and the related automated procedure for use as claimed in claim 17.

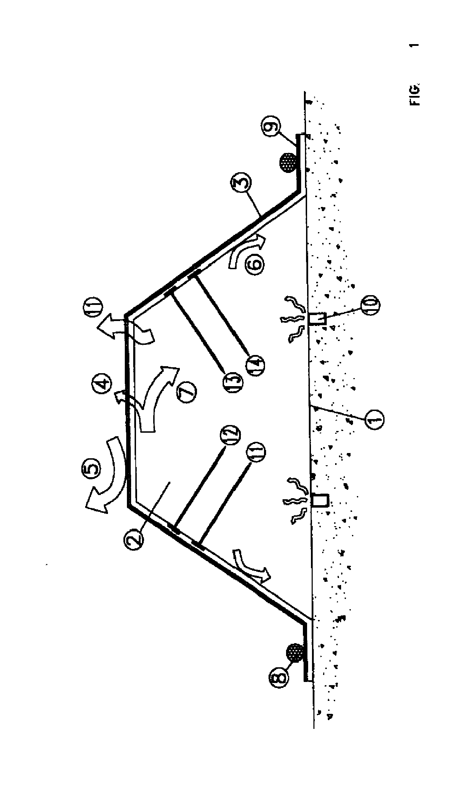

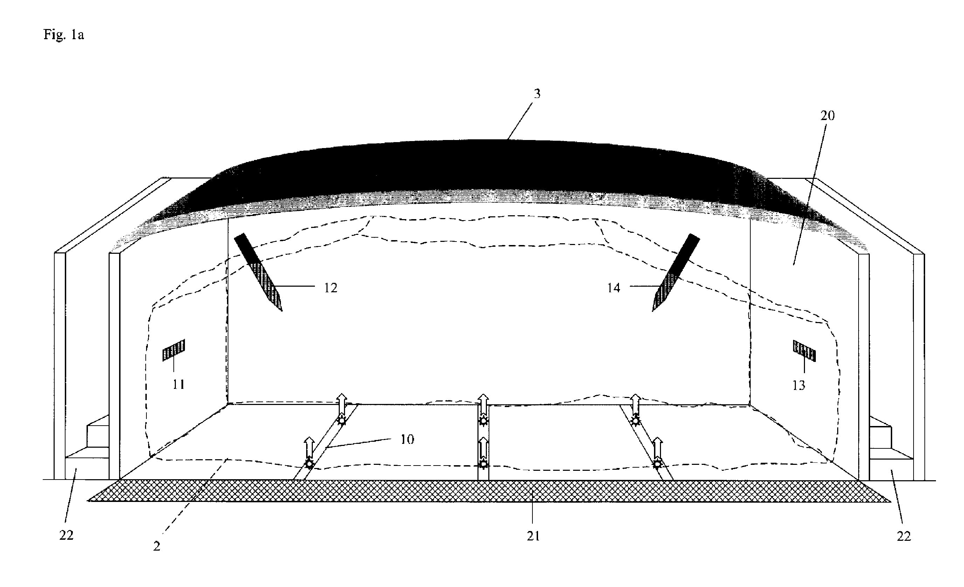

As it can be seen from figure 1, the system according to the present invention comprises the following components:
- a impermeable base (1) to support the pile (2)
- an aeration system for controlled blow-in of air
- a breathable impermeable cover (3) for the pile (2)
- sensors (11, 12, 13, 14) for controlling the process conditions

The waste 2 is arranged in the form of a trapezoidal pile, preferably with a maximum height of 3 m, optimal width approx. 7 m and maximum length of 50 m on a impermeable base 1 in which ducts 10 have been obtained embedded below the surface.

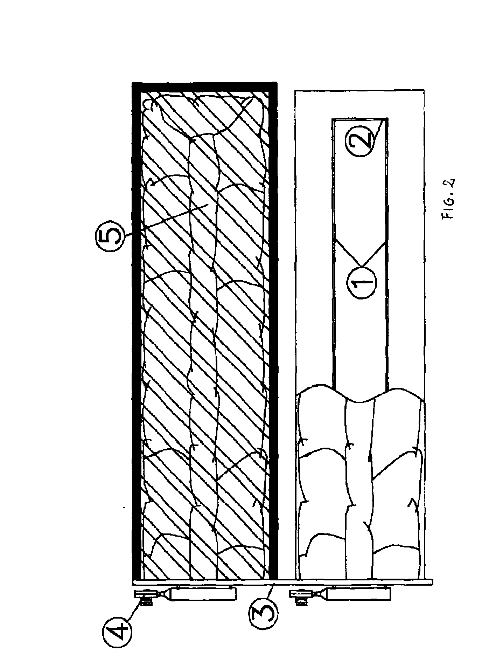

The ducts (10), in a minimum of 3 per pile, are made of stainless steel and are provided with holes of adequate diameter for blowing air inside the biomass.
The ducts are connected on the head side to a blow-in manifold into which air is introduced by a fan located outside the pile. The fan ((4) of figure 2) is provided with a three-phase electric motor equipped with inverter to modify the number of revolutions and related air flow. The fan must be able to guarantee a suitable pressure flow inside the pile, therefore countering the pressure losses generated inside the ventilation ducts.

On the opposite side of the fan the ducts are all interconnected by means of a cross pipe of sufficient section to form an air plenum, thus also favouring improved distribution of the air in the waste and avoiding preferential routes and therefore the formation of air "Flue" inside the pile.

Once the material to be treated has been arranged in a pile, it is isolated from the external environment by a impermeable breathable cover (3), the membrane of which consists preferably of expanded PTFE (Gore-Tex®). The Gore-Tex laminate consists of a three-layer sandwich: the two outer layers are made of polyester fibre resistant to UVA radiation and have a mainly mechanical protection function. The innermost layer in expanded PTFE is the so-called functional layer, which allows the laminate to transpire water vapour ((4) fig. 1) and at the same time to be impermeable to water in the liquid form ((5) fig. 1).

The properties that characterise an expanded PTFE laminate like the above one allow waste biostabilisation operations to be performed in the open air, since rainwater does not reach the biomass as it cannot penetrate the membrane, while water vapour is conveyed to the outside via the pores of the Gore-Tex membrane.

In addition to these essential characteristics, the micropores of the laminate, having dimensions of 0.2 µm, are able to retain the spores and bacteria inside the biomass ((6) fig. 1), thus guaranteeing improved hygienic and environmental conditions for the sector operators.

It is important, furthermore, for the success of the biostabilisation process, that the laminate shows a water vapour transmission factor (MTVR) equal to or higher than 5000 g/m² 24h. Lower values hinder good ventilation of the material to be stabilised and slow down maturing times. The laminate with Gore-Tex membrane also facilitates the confinement of unpleasant smells inside the sheeting.

The covering laminate (3) is anchored to the impermeable base (1) on the front side and on the external side of the containment walls.

The process parameters are controlled by means of temperature, humidity and oxygen control probes, (11, 12, 13, 14 figure 1). The signal detected by each of the probes, which form a measurement "set" for each pile, is sent to a PLC logic control unit of the single pile. The values are set on the PLC by the operator by means of graphic interface on the monitor of an industrial computer provided with dedicated software program.

Each computer is able to control an unlimited number of PLC control units and therefore an unlimited number of piles.

On the computer it is possible to manage the signals coming from several control units, hence the scan appears on the PC screen each time with the number of the pile referred to by the values appearing at that moment.

The temperature probe 12, operating in a range between 0°C and 100°C, consists of an AISI 316 stainless steel stem, length approx. 1000 mm, with a transverse metal grip. The stem is provided with military type female connector with high mechanical resistance and hermetic seal for interface with the connection cable. The stem houses 6 thermocouples able to detect the thermal gradient of the pile according to the depth of the material. Said value is processed in graphic form and displayed on the computer screen.

The device for detection and measurement of the relative humidity of the product (11 and 13) consists of two AISI 316 stainless steel plates, fixed in an opposite arrangement on the inner side of the two lateral walls, in contact with the mass of product to be treated. The electrical connection of the plates is guaranteed by an electrical lead, which transmits the signal to a junction box fixed on the outer side of the walls and to the PLC board. The operating range of the relative humidity probe is between 0 and 100%. The values are displayed on the graphic interface in the relative humidity box.

The oxygen probe (14) consists of an AISI 316 steel rod complete with grip. On the lower side of the rod a steel connection nipple is fixed by means of an M27 x 1 thread. The lower end part of the nipple is provided with thread on which the steel tip is screwed, provided with ventilation holes. The total length of the oxygen probe body is approx. 1200 mm. Measurement of the oxygen saturation inside the biomass is performed by detection of the local temperature by means of a thermocouple and a semi conductive electrolytic membrane, appropriately positioned in an electrolyte bath.

The resulting electrolytic process transforms measurement of the oxygen saturation into an electric signal which is read, temperature-compensated and interpreted by the PLC logic and then displayed in legible form on the control monitor. The oxygen probe operates in a range between 0 and 21%, with a deviation of 0.5%.

The system according to the present invention controls and manages all the above-mentioned parameters, maintaining the oxygen saturation level inside the biomass by calculation of the A between the value in air (approx. 21%) and that measured inside the biomass. In this way the system acts on the inverter device of the fan (4) to increase or reduce the number of revolutions and therefore the air flow.

The second parameter involved in achievement of optimal operating conditions is the temperature. If the temperature differs from the established limits, the flow rate of the fan (4) is modified to bring it back to the scheduled parameters.

The system therefore brings the waste mass to conditions of equilibrium, rapidly reaching the set-up values set on the computer screen. Once the condition of equilibrium has been reached (this takes a maximum of 3 to 4 days), the system reacts autonomously to any deviation from the set values to adjust the values to the initial reference parameters. The treatment is considered to be finished when oxygen is no longer required by the biomass and the temperatures tend to drop, indicating reduction or termination of the bacterial activity.

The system described above permits the treatment of large quantities of solid urban waste with considerable advantages over the current technologies, since the processing cost per ton is lower and it does not require turning or biofilter thanks to the Gore-Tex membrane which retains the unpleasant smells, germs and bacteria inside. Furthermore, it is constantly controlled by a dedicated program so that the process times are significantly shortened.

According to an alternative embodiment of the present invention, as shown in Fig. 1a, the static pile (2) of waste is positioned inside containment walls (20).

The containment walls offer the following advantages:
- the waste is contained within well-defined solid limits, thus favouring both its arrangement in a pile and removal at the end of the process by means of a mechanical shovel;
- it favours confinement of the waste, avoiding the dispersion of both solid and liquid parts (percolation liquids) which are collected by the blow-in ducts (10) and by the front channel (21) for collection and bleeding of the ducts;
- it facilitates movement of the impermeable breathable cover (3), which the operators slide on top of the walls, thus relieving a large part of the weight. In addition the walls are covered by a U-shaped steel section bar to reduce friction and lessen mechanical abrasion (due to the roughness of the concrete).
- The outer part of the walls of the lanes, near the walkways (22), is provided with anchoring hooks for the cover (3), so as to secure it against the action of the wind and guarantee that the unpleasant smells are retained inside the cover. In the front part of the system without wall, the breathable cover (3) is anchored to the ground.

The walls furthermore increase by approximately 10% the quantity in volume of the waste to be treated, with respect to the traditional stand-alone pile, as it favours the "vertical" formation of the mass, avoiding collapse on the slopes of the trapezium.

Furthermore, the space between the roof of the pile (2) and the cover (3) is considerably increased, with consequent increase in the area of air maintained in optimal conditions for development of the micro organisms involved in the biostabilisation process. The overall yield of the process is therefore increased and with it also the bacterial digestion speed.

The process of biostabilisation according to the present invention which uses the system described above comprises the following phases:
- arrangement of the pile (2) on a impermeable base (1)
- covering of the pile (2) with a breathable impermeable sheet (3)
- controlled blowing in of external ambient air by means of an aeration system
- adjustment of the internal temperature of the pile to a value of between 60 and 80°C.

Said process is based on the fact that due to the considerable difference in temperature between the inside and the outside of the pile, a chemical-physical effect takes place via which the molecules of the strongest smelling compounds (amines, mercaptans, terpenes, fatty acids and chlorinated compounds) return to the liquid phase by condensation on the surface of the pile ((7) fig. 1) providing new humidity for optimal development of the thermophilic bacterial flora.

The process of biostabilisation of the waste occurs via an exothermic oxidisation reaction, by blowing external ambient air, rich mainly in gases such as O₂ and N₂, into the static waste pile. Coming out of the pile, minimum traces of strong smelling compounds are found and large quantities of CO₂, odourless, which is pushed upwards by the blow-in of new fresh air from the bottom.

The initial conditions of the process depend on the type of material. In particular, in the case of organic substances deriving from differentiated waste collection, the temperatures will increase in the course of 6 - 8 hours from placing on the pile until reaching a value of between 70 and 75°C.
The humidity level ranges from around 45% max. in the dry season (autumn - winter), to 65% in the wetter season (spring - summer), due to the greater presence of fruit waste.

Said values will be considerably lower in the case of biostabilisation of waste itself, due to the presence of inert materials such as plastic or glass. It is even lower in the case of reclamation treatment of old dumps as the waste has already been partially digested in the body of the dump.

In general, the temperature is set at a value between 60 and 80°C, preferably between 65 and 75°C, in order to facilitate development in the biomass of both mesophilic and thermophilic micro organisms, therefore obtaining, in practice, a greater number of organisms able to attack the organic fraction.

The advantages deriving from the use of an air-blown static pile system with breathable impermeable cover consist mainly in an improved cost/yield ratio since, in addition to the reduced treatment times, use of the breathable membrane avoids the use of costly biofilters and therefore permits better control of the dispersion of unpleasant smells in the atmosphere.
Furthermore, with respect to the systems known in the art, via the alternative use of containment walls, significantly higher product quantities can be treated under the same conditions.

The automatic control system also avoids costly analyses on the respirometric index during the process to check its progress, since said calculation is performed automatically by the computer. On operator request, it is possible to request calculation of the value of the respirometric index without having to open the pile. In this case the bacterial flora of the biomass is not destroyed and no thermal shock occurs due to uncovering of the pile. The value is calculated automatically by the system via an algorithm obtained from the difference between the initial and final saturation value with oxygen, the latter being obtained by switching off the fan for a known time. The consumption (drop) in oxygen between beginning and end indicates the value of the respirometric index.

With the system and the method of the invention it is possible to achieve results that can be reproduced in a maximum treatment time of 20-25 days per pile for the intensive maturing phase without turning the material, while for the systems known in the art, the same results are achieved after treatment in excess of 8 weeks.

## Claims

1. System for the biostabilisation process of the organic fraction of a static waste pile, comprising the following components:
- impermeable base (1) for supporting the pile (2)
- aeration system for controlled blow-in of air
- breathable impermeable cover (3) of the pile (2)
- sensors (11, 12, 13, 14) for controlling the process conditions

2. System according to claim 1,
**characterised in that** the aeration system comprises ducts (10), obtained in the impermeable base (1), provided with air outlet holes.

3. System according to claim 1 or 2,
**characterised in that** the ducts (10) are connected on the head side to a blow-in manifold into which air is introduced by a three-phase electric fan (4).

4. System according to claim 3,
**characterised in that** the above-mentioned electric fan is provided with inverter to modify the number of revolutions and the flow of air into the system.

5. System as claimed in one of the claims 2 to 4,
**characterised in that** on the side opposite to the fan said ducts (10) are interconnected by a cross pipe to form an air plenum.

6. System as claimed in one of the claims 1 to 5,
**characterised in that** the breathable impermeable cover is provided with micropores having dimensions between 0.1 and 0.5 µm, preferably between 0.2 and 0.4 µm.

7. System as claimed in claim 6,
**characterised in that** the micropores have a dimension of 0.2 µm.

8. System as claimed in one of the claims 1 to 7,
**characterised in that** the breathable impermeable cover (3) has a water vapour transmission factor (MTVR) ≥ 5000g/m² in 24 hours.

9. System as claimed in one of the claims 1 to 8,
**characterised in that** the breathable impermeable cover (3) is made of Gore-Tex® sheeting.

10. System as claimed in one of the claims 1 to 9,
**characterised in that** the breathable impermeable cover (3) is fixed on the impermeable base (1).

11. System as claimed in one of the claims 1 to 10,
**characterised in that** the sensors (11, 12, 13, 14) controlling the process conditions comprise temperature, humidity and oxygen measurement probes.

12. System as claimed in one of the claims 1 to 11,
**characterised in that** said sensors (11, 12, 13, 14) are connected to an automated control unit managed via a computer.

13. System as claimed in one of the claims 1 to 12, further comprising containment walls (20) for the pile (2).

14. System according to claim 13,
**characterised in that** the humidity sensors are opposed plates (11, 13) fixed on said walls.

15. System according to claim 13 or 14,
**characterised in that** the breathable impermeable cover (3) is fixed on said walls.

16. Process for biostabilisation of the organic component of a static waste pile, comprising the following phases:
- arrangement of the pile (2) on a impermeable base (1)
- covering of the pile (2) with a breathable impermeable sheet (3)
- controlled blow-in of external ambient air by means of an aeration system
- adjustment of the internal temperature of the pile to a value of between 60 and 80°C

17. Process according to claim 16,
**characterised in that** the internal temperature of the pile is between 65 and 75°C.

18. Process according to one of the claims 16 or 17,
**characterised in that** the process parameters are automatically adjusted by a control unit, modifying the conditions of the air flow blown by the aeration system.

19. Process according to one of the claims 16 to 18, further comprising the phase of arrangement of the pile (2) inside containment walls (20).

20. Process according to claim 19,
**characterised in that** the breathable impermeable cover (3) is fixed on said containment walls (20).

21. Process according to claim 19 or 20,
**characterised in that** the humidity value is measured by opposed plates (11, 13) fixed on the containment walls (20).

22. Process according to one of the claims 16 to 21,
**characterised in that** the optimal ACT (Active Composting Time) parameters are reached after a treatment time of between 20 and 25 days.
